# EUROPEAN PATENT APPLICATION

(11) **EP 0 990 800 A1**
(43) Date of publication of application: **05.04.2000**
(21) Application number: 99307780.9
(22) Date of filing: 01.10.1999
(51) Int. Cl.: F04D 29/58, H02K 9/19, H02K 9/14

(54) **Forced closed-loop cooling for a submersible pump motor**

(30) Priority: 01.10.1998 US 164314
(71) Applicant: Ingersoll-Dresser Pump Company, Liberty Corner, NJ 07938-0810 (US)
(72) Inventor: Behnke, Paul W., Hanover, Pennsylvania 17331 (US); Cronin, Richard J., Eldersburg, Maryland 21784 (US)
(74) Representative: Feakins, Graham Allan

(57) **Abstract**

A forced closed-loop cooling system is provided for an electric motor driven submersible pump having a motor housing (10) containing an electric motor with a rotatable motor shaft (13) extending therefrom and a pump housing (40) attached to the motor housing, the pump housing having a fluid inlet, a fluid outlet, and a pump impeller (45) mounted therein on the motor shaft. The closed-loop cooling system consists of a coolant jacket (20) surrounding the motor housing to define an annular motor cooling chamber (21) and an end plate (30) interposed between the motor housing and the pump housing to define a coolant sump (25) about the motor shaft. The coolant sump is in fluid communication with the motor cooling chamber and sealed from pumped fluid in the pump housing by the end plate. The end plate has features for enhanced heat transfer and is in contact with the pumped fluid in the pump housing for transferring heat thereto. There is also provision for forced circulation of coolant between the coolant sump and the annular motor cooling chamber.

## Description

This invention relates generally to cooling for pump motors and more particularly to forced closed-loop cooling for electrical motors on submersible pumps.

Submersible pumps are typically run fully submerged in a fluid capable of providing ample heat transfer for cooling their integral electric motors. However, there are instances in which the space constraints of the application require a small package. In such cases, the motor must be made as small as possible, and as a consequence, cooling must be provided to the motor in order for it to be able to operate at higher than normal power output for its size. In other cases, the pump must operate continuously or intermittently in air. Since still air provides insufficient cooling, the motor is subject to thermal overload and either shuts off or fails. Cooling may be provided by circulating the pumped fluid around the motor housing within a cooling jacket, but this may be impractical or even impossible when pumping sewage or other solids bearing fluids. Pumps used for pumping clean fluids may be cooled by circulating the pumped fluid through cooling passages cast into the motor housing. However such integrally cast passages increase the complexity and cost of the housing castings and of the pumps made with them. Although such costs are objectionable, they are a necessary consequence of avoidance of early failure of submersible pumps and motors.

According to one aspect of the present invention, there is provided a forced closed-loop cooling system for an electric motor driven submersible pump having a motor housing containing an electric motor with a rotatable motor shaft extending therefrom, a pump housing attached to said motor housing, said pump housing having a fluid inlet, a fluid outlet and a pump impeller mounted therein on said motor shaft, said closed-loop cooling system comprising a coolant jacket surrounding said motor housing to define an annular motor cooling chamber, coolant fluid filling said motor cooling chamber, an end plate interposed between said motor housing and said pump housing to define a coolant sump about said motor shaft, said coolant sump being in fluid communication with said annular motor cooling chamber and sealed from pumped fluid in said pump housing; characterised in that said end plate has means for enhancing heat transfer and being in contact with said pumped fluid in said pump housing for transferring heat thereto, and there being means for forced circulation of coolant between said coolant sump and said motor cooling chamber.

According to another aspect of the present invention, there is provided a submersible pump with an electric motor, comprising a motor housing containing an electric motor with a rotatable motor shaft extending therefrom through a housing extension, an end plate attached to said housing extension and having an opening with a seal through which said motor shaft extends, a pump housing attached to said end plate, said pump housing having a fluid inlet, a fluid outlet and a pump impeller mounted therein on said motor shaft, and a closed-circuit system for cooling said motor, including an annular motor cooling chamber filled with coolant fluid and surrounding the motor housing and a coolant sump within said housing extension between said end plate and said motor housing for receiving coolant from said motor cooling chamber; characterised by means for forced circulation of coolant between said coolant sump and said motor cooling chamber, and enhanced heat transfer means on said end plate for transferring motor heat from said coolant to fluid being pumped by said impeller.

For a better understanding of the invention and to show how the same may be carried into effect, reference will now be made, by way of example, to the accompanying drawings, in which:-
Fig. 1 is a diagrammatic cross-sectional side view of a submersible pump illustrating a closed-loop forced cooling system of a pump;
Fig. 2 is an enlarged view of the portion of the pump of Fig. 1;
Figs. 3, 3A and 3B are a plan view, a sectional view in the direction of arrows A-A, and a sectional view in the direction of arrows B-B, respectively, of a cover plate;
Fig. 4 is a perspective view of a coolant impeller;
Figs. 5 and 5A are plan and cross sectional views, in the direction of arrows A-A, of an end plate;
Fig. 6 is a diagrammatic perspective view, partly in section, of a submersible pump to show the operation of the closed-loop forced cooling system; and
Fig. 7 is a schematic perspective underneath view of an end plate incorporating fins which extend into the pump housing for further enhancing the heat transfer to the pumped fluid.

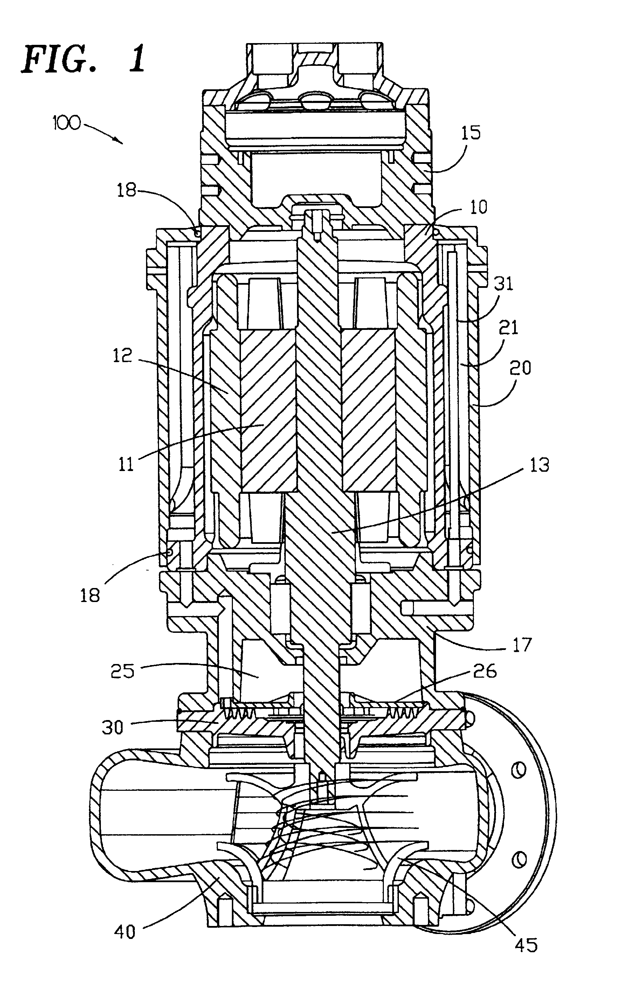

A submersible pump 100 is shown in Fig. 1 to illustrate the overall structure of the pump, including the closed-loop cooling system. Such pumps are usually mounted vertically, as shown, for pumping fluids from wet pits containing contaminated fluids at varying levels. It includes a motor housing 10 with a motor housing head 15 and a motor housing extension 17. The housing 10 contains a stator 12, and a rotor 11 carrying a motor shaft 13 extending axially therefrom. The motor housing extension 17 is attached to a pump housing 40 with an inlet, an outlet, and an impeller 45, mounted to the motor shaft 13, for pumping sewage or other solids-bearing fluid. The inlet is shown here as being on the bottom centre of the pump housing 40 and the outlet, tangentially directed at the side, but it should be understood that, for different applications under differing space constraints, the pump housing 40 may be differently configured. The motor housing 10 is surrounded by a coolant jacket 20, which is sealed with o-rings 18 or other suitable seals to the housing, to define an annular coolant chamber 21 filled with a coolant fluid in contact with the motor housing.

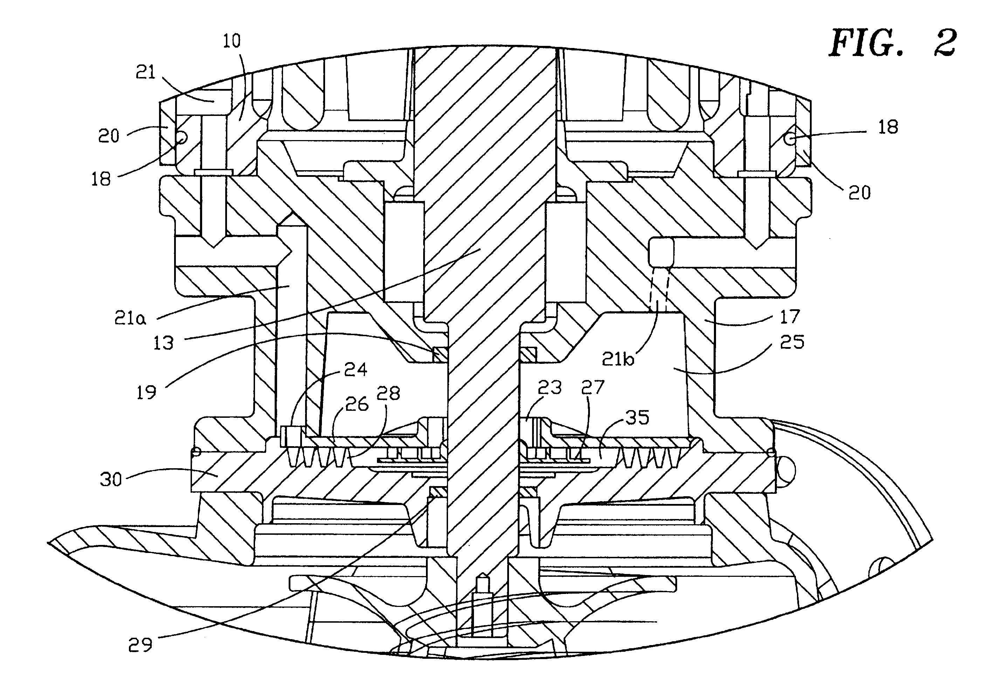

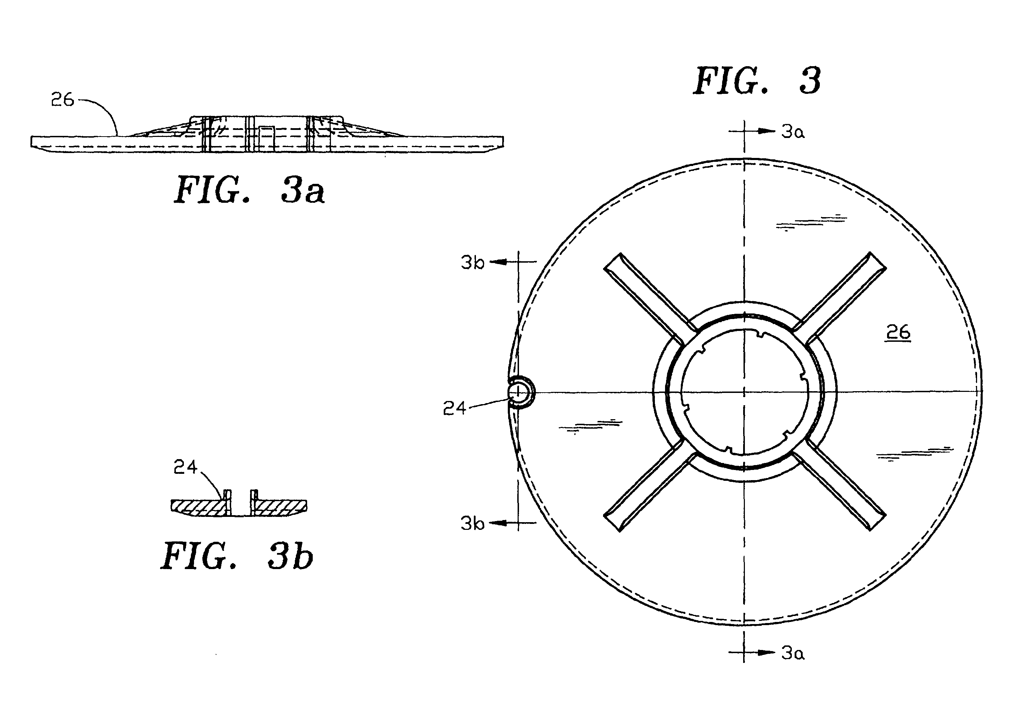

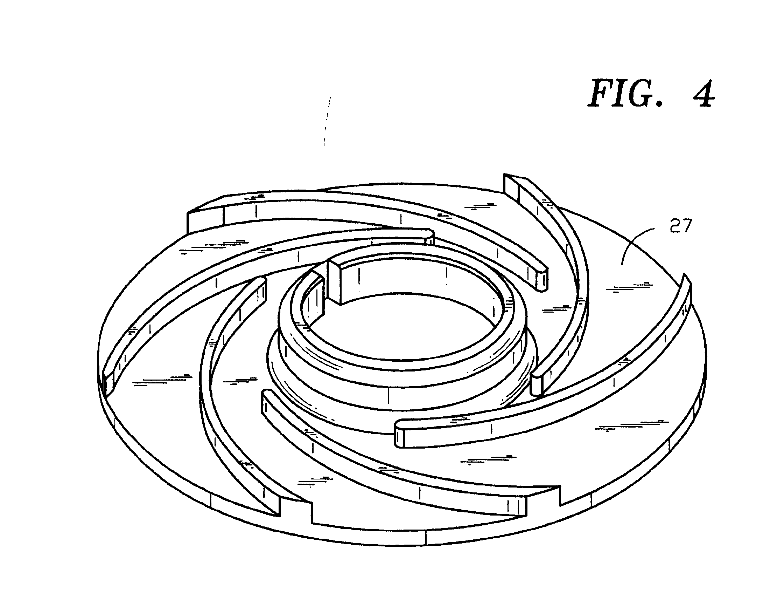

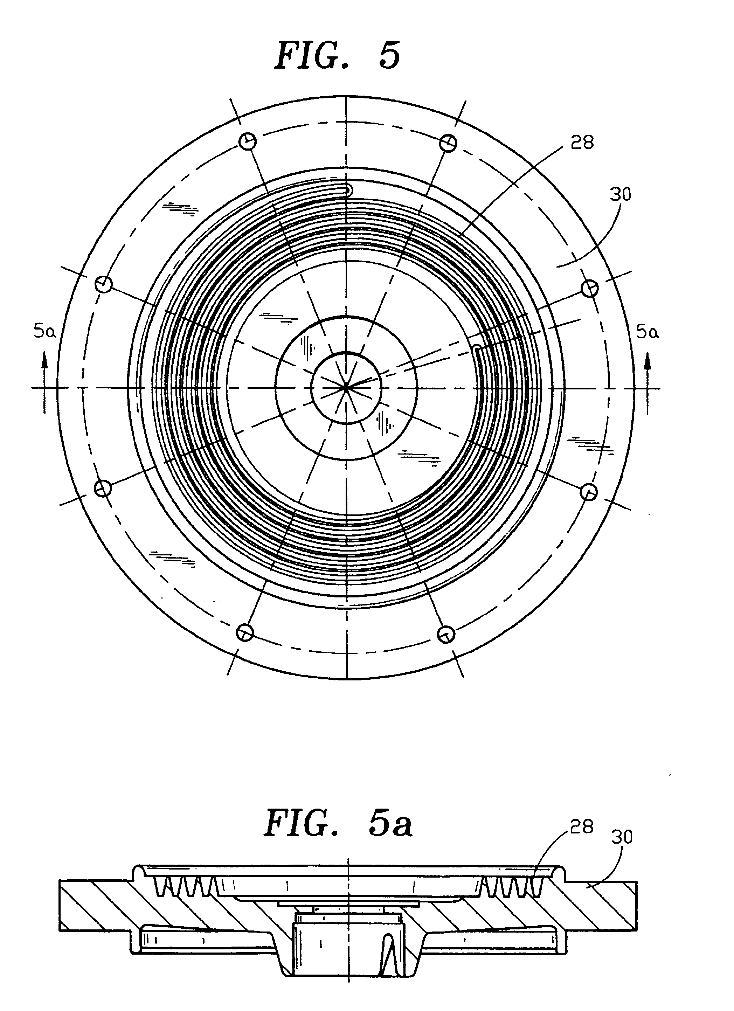

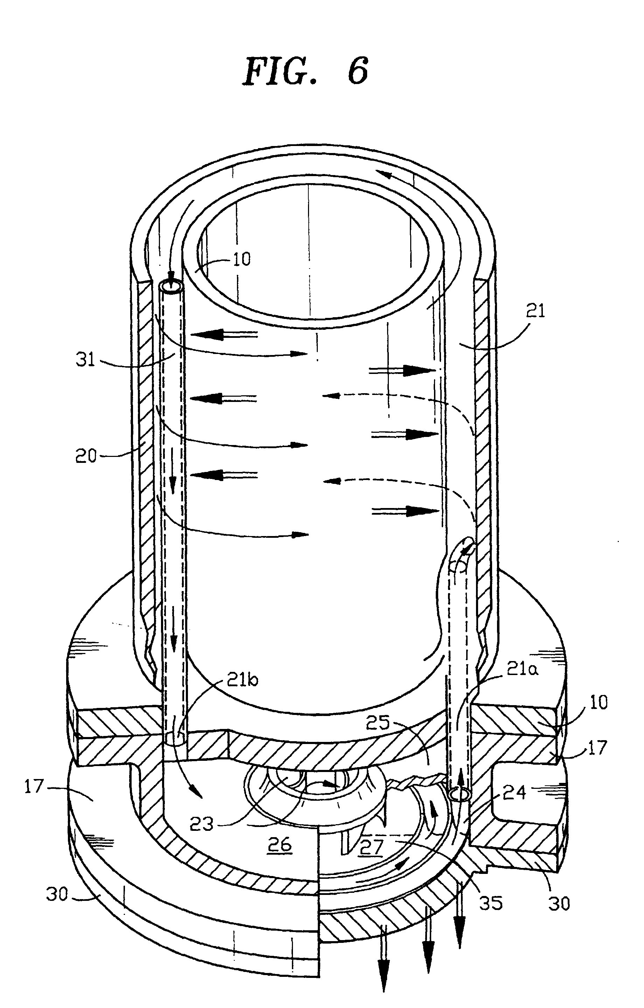

An end plate 30, seen in Figs. 5 and 5A, is situated on the end of the motor housing extension 17, seen also in Fig. 2, to define a coolant sump 25 within the housing extension and to separate it from the pumped fluid in the pump housing 40. Seals 19 and 29 seal the shaft 13 to deter leakage of fluid out of or into the coolant sump, respectively. A cover plate 26, shown here and in Figs. 3, 3A and 3B, nests between the motor housing extension 17 and the end plate 30 to define a coolant pumping chamber 35 with an annular centred inlet 23 about the motor shaft 13, for admitting coolant fluid returning through the return orifice 21B from the coolant chamber 21, and an outlet 24 at its edge connecting to a passage 21A into the annular coolant chamber 21. The return orifice 21B connects to a stand pipe 31 (seen in Fig. 6) in the annular coolant chamber 21. The stand pipe 31 assures that coolant entering at the bottom of the coolant chamber 21 will flow all the way to the top of the chamber before returning to the coolant sump 25. This prevents short-circuiting of the coolant fluid, and provides maximum heat extraction from the motor housing 10. A coolant impeller 27 (see also Fig. 4) is mounted on the motor shaft 13 within the coolant pumping chamber 35 adjacent to the end plate 30 and is surrounded by at least one fin 28, preferably in the form of a spiral defining an extended volute, but also possibly in the form of a plurality of short substantially radially-directed fins. In the latter case, the outlet 24 of the coolant pumping chamber 35 would be more circumferentially distributed than in the preferred embodiment of the fin 28 shown in Figs. 5 and 5A.

Fig. 6 is a partially cut-away schematic representation of the pump used to illustrate the closed-loop flow path of the coolant fluid during operation of the pump. Beginning in the coolant sump 25 within motor housing extension 17, the coolant passes through the inlet 23 in the cover plate 26 of the coolant pump chamber 35 and is pumped outwardly by the impeller 27 through the volute formed by the spiral fin on the end plate 30 to the outlet 21A of the coolant pumping chamber and into the annular coolant chamber 21. The coolant fluid then travels around the motor housing 10 as it passes upward in the coolant chamber until it reaches the top of the chamber and overflows into the stand pipe 31 through which it returns to the inlet 21B of the coolant sump 25. The arrows pointing downward in Fig. 6 represent the flow of heat from the coolant fluid through the end plate 30 into the pumped working fluid in the pump housing.

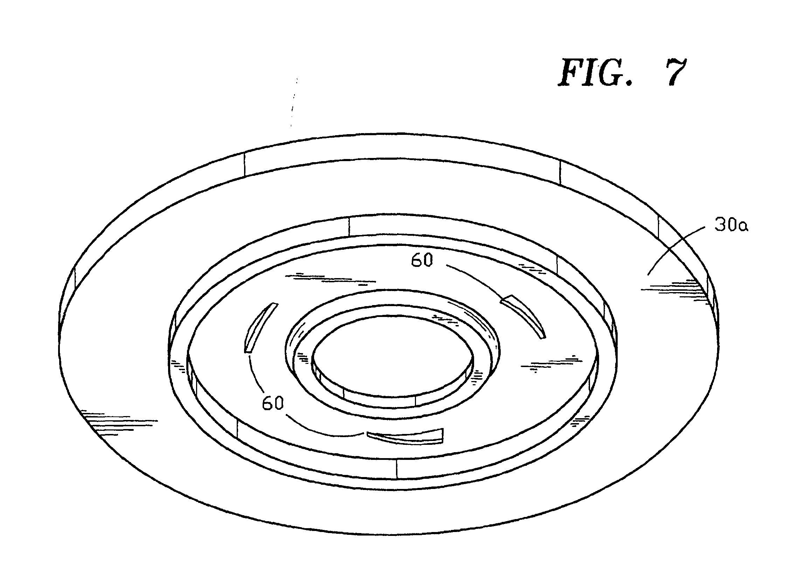

The heat extraction from the motor is substantially completely through the end plate 30 and into the pumped fluid. This design is necessitated by the uncertainty of having any heat removal through the wall of the coolant jacket 21 due the possibility of operating with only the pump housing exposed to working fluid. Accordingly, it is desirable to enhance heat transfer through the end plate 30 to the maximum extent possible. Fig. 7 shows an end plate 30A equipped on its lower surface with fins 60, which project axially into the pump housing behind the pump impeller and which increase heat release from the end plate 30A to the pumped fluid. The specific design and orientation of the fins 60 will depend upon the natural fluid flow pattern in the space between the pump impeller and the end plate, as determined by sizing and clearances within the pump housing. The fin(s) 28, 60 on both surfaces of the end plate 30A increase heat flow into and out of the end plate, thereby enhancing heat transfer between the coolant fluid within the closed-loop cooling system and the pumped (or working) fluid passing through the pump housing. Additional heat transfer enhancements, which are not illustrated, include the following. The end plate can be formed with the spiral fin surrounding the coolant impeller formed as a spiral corrugation, such that the wall thickness of the end plate at the spiral fin is constant; and the end plate having a spiral tube brazed or otherwise attached to its face in contact with the pumped fluid in the pump housing. The spiral tube embodiment would require a redesign or elimination of the coolant sump, with the coolant impeller inlet being situated to receive coolant exiting from the tube after being cooled by the pumped fluid.

## Claims

1. A forced closed-loop cooling system for an electric motor driven submersible pump having a motor housing (10) containing an electric motor with a rotatable motor shaft (13) extending therefrom, a pump housing (40) attached to said motor housing, said pump housing having a fluid inlet, a fluid outlet and a pump impeller (45) mounted therein on said motor shaft, said closed-loop cooling system comprising a coolant jacket (20) surrounding said motor housing to define an annular motor cooling chamber (21), coolant fluid filling said motor cooling chamber, an end plate (30) interposed between said motor housing and said pump housing to define a coolant sump (25) about said motor shaft, said coolant sump being in fluid communication with said annular motor cooling chamber (21) and sealed from pumped fluid in said pump housing; characterised in that said end plate (30) has means for enhancing heat transfer and being in contact with said pumped fluid in said pump housing (40) for transferring heat thereto, and there being means (27) for forced circulation of coolant between said coolant sump (25) and said motor cooling chamber (21).

2. A cooling system according to claim 1, wherein the means on said end plate (30) for enhanced heat transfer comprises at least one axially extending fin (28) within said coolant sump (25) surrounding said means for circulating coolant.

3. A cooling system according to claim 1 or 2, wherein the means for forced circulation of coolant between said coolant sump (25) and said motor cooling chamber (21) comprises a coolant impeller (27) mounted adjacent said end plate (30) on said motor shaft (13) within said coolant sump and a cover plate (26) overlying said coolant impeller to define a coolant pumping chamber (35) with a coolant inlet (23) provided by an opening around said motor shaft and a coolant outlet (24) in the periphery of said cover plate leading to said annular motor cooling chamber (21).

4. A cooling system according to claims 2 and 3, wherein said fin (28) is a spiral fin extending between said end plate (30) and said cover plate (26) to form an extended volute between the outer edge of said coolant impeller (27) and said coolant outlet (24).

5. A cooling system according to any one of the preceding claims, wherein the means for enhancing heat transfer comprises at least one axially extending fin (60) arranged to project from said end plate (30) into said pumped fluid in said pump housing (40).

6. A cooling system according to any one of the preceding claims, comprising a stand pipe (31) extending from a point at the upper end of the cooling chamber (21), downwardly through said cooling chamber to an orifice (21B) leading into the coolant sump (25), for returning coolant fluid to said coolant sump.

7. A submersible pump with an electric motor, comprising a motor housing (10) containing an electric motor with a rotatable motor shaft (13) extending therefrom through a housing extension, an end plate (30) attached to said housing extension and having an opening with a seal (19, 29) through which said motor shaft extends, a pump housing (40) attached to said end plate, said pump housing having a fluid inlet, a fluid outlet and a pump impeller (45) mounted therein on said motor shaft, and a closed-circuit system for cooling said motor, including an annular motor cooling chamber (21) filled with coolant fluid and surrounding the motor housing and a coolant sump (25) within said housing extension between said end plate and said motor housing for receiving coolant from said motor cooling chamber; characterised by means (27) for forced circulation of coolant between said coolant sump (25) and said motor cooling chamber (21), and enhanced heat transfer means on said end plate (30) for transferring motor heat from said coolant to fluid being pumped by said impeller (45).

8. A pump according to claim 7, wherein the means for forced circulation of coolant between said coolant sump (25) and said motor cooling chamber (21) comprises a coolant impeller (27) mounted on said motor shaft (13) within said coolant sump adjacent said end plate (30), a cover plate (26) overlying said coolant impeller to define a coolant pumping chamber (35) with a coolant inlet (23) provided by an annular opening around said motor shaft and a coolant outlet (24) in the periphery of said cover plate leading to said motor cooling chamber (21).
